# EUROPÄISCHE PATENTSCHRIFT

(11) **EP 1 660 737 B1**
(45) Veröffentlichungstag und Bekanntmachung des Hinweises auf die Patenterteilung: **29.07.2009**
(21) Anmeldenummer: 04764440.6
(22) Anmeldetag: 25.08.2004
(51) Int. Cl.: E04F 13/08, E04F 13/14, E06B 3/54

(54) **BEFESTIGUNGSEINRICHTUNG ZUR HERSTELLUNG EINER VERANKERUNG IN INSBESONDERE AUS GLAS BESTEHENDEN PLATTEN**
FIXING DEVICE FOR PRODUCING AN ANCHORAGE IN PLATES ESPECIALLY CONSISTING OF GLASS
DISPOSITIF DE FIXATION DESTINE A LA FABRICATION D'UN ANCRAGE DANS DES PLAQUES NOTAMMENT CONSTITUEES DE VERRE

(30) Priorität: 04.09.2003 DE 10340720
(43) Veröffentlichungstag der Anmeldung: 31.05.2006
(73) Patentinhaber: fischerwerke GmbH & Co. KG, 72178 Waldachtal (DE)
(72) Erfinder: UNTERWEGER, Roland, A-9020 Klagenfurt (AT); BOHNET, Hartmut, 72178 Waldachtal (DE)
(74) Vertreter: Suchy, Ulrich Johannes
(86) Internationale Anmeldenummer: PCT/EP2004/009463
(87) Internationale Veröffentlichungsnummer: WO 2005/028777

(56) Entgegenhaltungen:
- EP-A- 0 314 120
- EP-A- 0 352 226
- WO-A-02/02899
- WO-A1-01/09459
- AU-B- 593 725
- US-A- 4 642 964
- US-A- 4 793 112
- US-A- 5 787 662
- US-B1- 6 519 903

## Beschreibung

Die Erfindung betrifft eine Befestigungseinrichtung zur Herstellung einer Verankerung in insbesondere aus Glas bestehenden Platten mit den Merkmalen des Oberbegriffs des Anspruchs 1.

Aus der Druckschrift DE 43 34 286 C2 ist ein Befestigungselement bekannt, das insbesondere der Befestigung von Glasplatten dient. Es besteht aus einem Ankerbolzen und einem Spreizelement, wobei das Spreizelement durch Einziehen und/oder Aufschieben auf den Spreizkonus des Ankerbolzens in einem eine Hinterschneidung aufweisenden Bohrloch verankerbar ist. Zwischen dem Spreizelement und der Wandung des hinterschnittenen Bohrloches ist ein Presselement aus weichem Kunststoff angeordnet. Hierdurch wird erreicht, dass die Haltekräfte nicht zu hohen Punktlasten im Bohrloch führen, wie dies bei direktem Kontakt zwischen Metall und Glas nicht auszuschließen wäre.

Die Druckschrift US 5 787 662 zeigt ein Bauelement für die Verglasung von Bauten mit Glastafeln aus Verbundsicherheitsglas unter Verwendung eines Halteelements. Das Halteelement weist einen unteren und einen oberen Auflageteller mit einem Neoprenring auf, an denen die Verbundglasscheibe aufliegt. Die Glasscheibe weist eine Durchgangsbohrung auf, durch die ein Gewindebolzen mit einer umgebenden Hülse durchgeführt ist. Der Ringspalt zwischen Glas und Hülse ist mit einem fließfähigen, aushärtbaren Kunststoff ausgefüllt.
EP-A-0314120 offenbart der Oberbegriff gemäß Anspruch 1.

Problematisch an derartigen Verankerungen ist, dass sie wenig Nachgiebigkeit aufweisen. Insbesondere während der Aufhängung und durch thermisch bedingte Längenänderungen im eingebauten Zustand kann es zu erheblichen Querkräften und Biegemomenten kommen, wenn dem nicht durch aufwändige Maßnahmen, beispielsweise im Bereich des Tragwerks, entgegengewirkt wird.

Der Erfindung liegt daher die Aufgabe zu Grunde, eine insbesondere für die Befestigung von Glasplatten geeignete Befestigungseinrichtung zu schaffen, die eine erhöhte Elastizität aufweist.

Diese Aufgabe wird erfindungsgemäß durch die Merkmale des Anspruchs 1 gelöst. Die erfindungsgemäße Befestigungseinrichtung sieht keine Verankerung mittels Verspreizen sondern mittels einer aushärtbaren Masse vor, beispielsweise einem Epoxydharz, Polyesterharz oder einem Mörtel. Der Ankerbolzen ist im Bereich des Verankerungsabschnitts mit einer Ummantelung aus einem elastischen Kunststoff umgeben. Dies sorgt für eine Elastizität des Befestigungselements in alle Richtungen, wodurch eine Schrägstellung des Ankerbolzens gegenüber der Platte möglich ist. Außerdem wird hierdurch erreicht, dass der Ankerbolzen an keiner Stelle die Bohrlochwand berührt. Eine solche Berührung könnte ohne die Ummantelung beispielsweise durch eine außermittige Lage des Ankerbolzens oder ein Aufsetzen auf dem Bohrlochgrund während des Aushärtens der Masse auftreten. Während derartige Berührungen zu den erwähnten Punktlasten führen können, sichert eine elastische Umhüllung eine flächige Verteilung.

Entscheidend für die erreichbaren Haltewerte der Befestigung ist neben der Auslegung des Ankerbolzens insbesondere die Geometrie des Bohrlochs. Damit eine aushärtbare Masse in einem Bohrloch eine sichere Verbindung eingehen kann, muss es neben adhesiven Wirkungen zu einer formschlüssigen Verbindung kommen. Gerade bei den typischerweise diamantgebohrten Bohrlöchern in Glas ergeben sich aufgrund der sehr glatten Oberfläche bei zylindrischen Bohrlöchern keinerlei hierzu geeignete Hinterschneidungen. Daher muss mittels eines Ausschwenkens des Bohrers oder dgl. eigens eine Hinterschneidung eingebracht werden. Ohne den Erfindungsgedanken zu verlassen, können diese Hinterschneidungen aber auch die Form von unregelmäßigen Riefen, umlaufenden Rillen oder jeglicher Art von Rauigkeit aufweisen.

Die Elastizität der Befestigungseinrichtung kann einerseits durch die Dicke und andererseits durch den Elastizitätsmodul des verwendeten Kunststoffs gesteuert werden. Je breiter die Ummantelung ist, desto größer sind die ausgleichbaren Verschiebungen, die beispielsweise durch thermische Dehnungen verursacht werden. Vorzugsweise ist die Dicke der Ummantelung jedoch so gewählt, dass der kleinste Außendurchmesser der Ummantelung geringer als der maximale Durchmesser des Verankerungsabschnitts des Ankerbolzens ist. Hierdurch wird erreicht, dass der Ankerbolzen nicht durch reines Abscheren der Ummantelung entlang einer Zylinderfläche aus dem Bohrloch gezogen werden kann.

Zweckmäßigerweise enthalt die Ummantelung als einen Bestandteil Silikon, da dieses sich als widerstandsfähiges, dauerelastisches Material für diese Anwendung als geeignet herausgestellt hat.

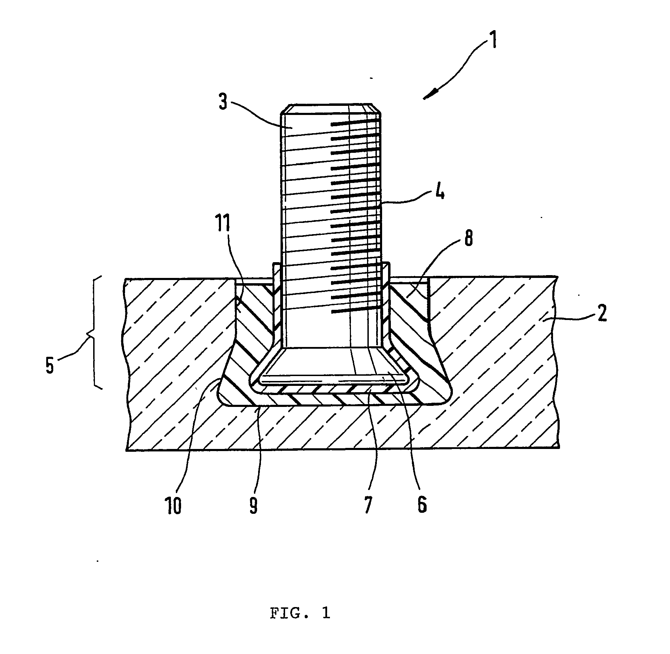

Die Erfindung wird nachfolgend anhand eines in der Zeichnung dargestellten Ausführungsbeispiels näher erläutert. Die Figur zeigt in einer Schnittdarstellung eine erfindungsgemäße Befestigungseinrichtung 1 zur Befestigung einer Glasplatte 2. Das Befestigungselement weist einen Ankerbolzen 3 mit einem Außengewinde 4 als Befestigungsmittel sowie einem Verankerungsabschnitt 5 mit einer konischen Querschnittsaufweitung 6 in Einbringrichtung auf. An dem Außengewinde 4 kann beispielsweise mit Hilfe von Muttern, Unterlegscheiben oder dgl. die Anbindung an ein Tragwerk erfolgen (nicht dargestellt). Der Verankerungsabschnitt 5 weist eine silikonhaltigen Ummantelung 7 auf, die von einer ausgehärteten Masse 8 umgeben ist. Das Bohrloch 9 weist eine konische Hinterschneidung 10 auf, die verhindert, dass die ausgehärtete Masse 8 durch Ablösung von der Bohrlochwand 11 aus dem Bohrloch 9 gezogen werden kann. Die Dicke der Ummantelung 7 ist so gewählt, dass die Querschnittsaufweitung 6 des Verankerungsabschnitts 5 unabhängig von der Ummantelung einen Hinterschnitt in der ausgehärteten Masse 8 bildet. Hierdurch wird erreicht, dass der Ankerbolzen 3 selbst bei vollständiger Verdrängung der Ummantelung 7 nicht aus der ausgehärteten Masse 8 gezogen werden kann. Dennoch sind elastische Verschiebungen in alle Richtungen von etwa der doppelten Dicke der Ummantelung und ein Schrägstellen von etwa 10 Grad möglich.

Zur Verankerung mittels der Befestigungseinrichtung 1 wird nach der Erstellung des hinterschnittenen Bohrlochs 9 zunächst die Masse 8 eingebracht. Bevor diese aushärtet, wird der Ankerbolzen 3 in das Bohrloch 9 gesteckt. Hierdurch wird die Masse 8 verdrängt und verteilt sich um den Ankerbolzen 3. Dabei ist eine mittige Positionierung nicht notwendig. Falls dies jedoch aus Gründen einer präzisen Anbindung an ein Tragwerk erwünscht ist, kann die Ummantelung 7 zusätzlich an ihrem dem Verankerungsabschnitt 5 abgewandten Ende einen umlaufenden Bund, Rippen oder dgl. (nicht dargestellt) aufweisen, der für eine Zentrierung und/oder einen axialen Anschlag am Bohrloch 9 sorgt.

## Patentansprüche

1. Befestigungseinrichtung (1) zur Herstellung einer Verankerung, mit einer aus Glas bestehenden Platte (2), wobei die Platte (2) ein hinterschnittenes Sackbohrloch (9) aufweist, mit einer aushärtbaren Masse (8) und mit einem Ankerbolzen (3), der Befestigungsmittel (4) und einen Verankerungsabschnitt (5) mit einer Querschnittsaufweitung (6) in Einbringrichtung aufweist, **dadurch gekennzeichnet, dass** der Ankerbolzen (3) im Bereich des Verankerungsabschnitts (5) vollständig von einer Ummantelung (7) aus einem elastischen Kunststoff umgeben ist, dass auf Grund der Ummantelung (7) eine Schrägstellung des Ankerbolzens (3) gegenüber der Platte (2) möglich ist, und dass der Ankerbolzen (3) mittels der aushärtbaren Masse (8) verankert ist.

2. Befestigungseinrichtung nach Anspruch 1, **dadurch gekennzeichnet, dass** der kleinste Außendurchmesser der Ummantelung (7) kleiner als die Querschnittsaufweitung (6) des Ankerbolzens (3) ist.

3. Befestigungseinrichtung nach Anspruch 1, **dadurch gekennzeichnet, dass** die Ummantelung (7) aus einem silikonhaltigen Kunststoff besteht.

## Claims

1. Fixing device (1) for producing an anchoring, with a panel (2) consisting of glass, the panel (2) having an undercut blind drilled hole (9), with a curable composition (8) and with an anchor bolt (3) which has fixing means (4) and an anchoring zone (5) having a portion (6) that widens in cross-section in the direction of insertion, **characterized in that** the anchor bolt (3), in the region of the anchoring zone (5), is completely surrounded by a covering (7) of a resilient plastics material; as a result of the covering (7) an inclined position of the anchor bolt (3) relative to the panel (2) is possible, and the anchor bolt (3) is anchored by means of the curable composition (8).

2. Fixing device according to claim 1, **characterized in that** the smallest outer diameter of the covering (7) is smaller than the portion of widened cross-section (6) of the anchor bolt (3).

3. Fixing device according to claim 1, **characterized in that** the covering (7) consists of a silicone-containing plastics material.

## Revendications

1. Dispositif de fixation (1) pour la réalisation d'un ancrage, avec une plaque (2) constituée de verre, sachant que la plaque (2) présente un trou borgne contre-dépouillé (9), avec une masse durcissable (8) et avec un boulon d'ancrage (3) qui comporte des éléments de fixation (4) et une partie d'ancrage (5) présentant un élargissement de section (6) dans la direction d'introduction, **caractérisé en ce que** le boulon d'ancrage (3) est, dans la région de la partie d'ancrage (5), totalement entouré par un gainage (7) en une matière plastique élastique, **en ce que**, en raison du gainage (7), une position biaise du boulon d'ancrage (3) par rapport à la plaque (2) est possible, et **en ce que** le boulon d'ancrage (3) est ancré au moyen de la masse durcissable (8).

2. Dispositif de fixation selon la revendication 1, **caractérisé en ce que** le plus petit diamètre extérieur du gainage (7) est inférieur à l'élargissement de section (6) du boulon d'ancrage (3).

3. Dispositif de fixation selon la revendication 1, **caractérisé en ce que** le gainage (7) est constitué d'une manière plastique à teneur en silicone.
